# EUROPÄISCHE PATENTSCHRIFT

(11) **EP 1 477 351 B1**
(45) Veröffentlichungstag und Bekanntmachung des Hinweises auf die Patenterteilung: **08.01.2014**
(21) Anmeldenummer: 04011025.6
(22) Anmeldetag: 10.05.2004
(51) Int. Cl.: B60J 7/057

(54) **Fahrzeugdach mit einer Bedieneinrichtung für elektrische Fahrzeugkomponenten**
Vehicle roof equipped with an operating device for electrical vehicle components
Toit de véhicule équipé avec un dispositif de commande pour composants électriques de véhicule

(30) Priorität: 15.05.2003 DE 10321964
(43) Veröffentlichungstag der Anmeldung: 17.11.2004
(73) Patentinhaber: Webasto AG, 82131 Stockdorf (DE)
(72) Erfinder: Jöhl, Anton, 83670 Bad Heillbrunn (DE); Klesing, Joachim, 82223 Eichenau (DE); Rudolph, Thomas, 82229 Seefeld (DE); Eder, Michael, 86899 Landsberg (DE)
(74) Vertreter: Roos, Peter

(56) Entgegenhaltungen:
- EP-A2- 1 293 882
- EP-B1- 1 558 465
- WO-A1-02/063601
- DE-A1- 10 022 321
- DE-A1- 10 036 394
- DE-A1- 19 911 592
- US-B1- 6 198 175

## Beschreibung

Die vorliegende Erfindung betrifft ein Fahrzeugdach nach dem Oberbegriff des Anspruchs 1.

Im Innenraum von modernen Fahrzeugen sind in der Regel eine Vielzahl von manuell zu betätigenden, elektrischen Bedienelementen zur Bedienung von Fahrzeugkomponenten durch den Fahrer oder durch Mitinsassen des Fahrzeugs untergebracht (z. B. Schiebeschalter, Drehschalter oder Drucktaster).

In der Praxis als besonders wichtig zu erachtende Bedienelemente (z. B. für Scheinwerferlicht, Scheibenwischer etc.) werden hierbei meist im unmittelbaren Sichtbereich des Fahrers angeordnet, d. h. in einem Bereich des Fahrzeuginnenraums, den der Fahrer während des Fahrzeuggebrauchs "mit Blick nach vorne" ohne größere Ablenkung vom Umgebungsgeschehen gut überblicken kann und der im "Griffbereich" des Fahrers liegt. Dieser insbesondere aus Sicherheitsgründen bevorzugte Bereich zur Anordnung von Bedienelementen liegt bei einem Kraftfahrzeug unmittelbar vor dem Fahrer, so dass diese Bedienelemente vorteilhaft z. B. an einer Lenksäule, einer Instrumententafel oder einer Mittelkonsole angeordnet werden können.

Mit zunehmenden Komfort in modernen Fahrzeugen und dem damit verbundenen Anstieg der Anzahl von zu realisierenden Bedienfunktionen wurde die Anordnung von Bedienelementen im Sichtbereich des Fahrers aus Platzgründen immer schwieriger.

Zur Lösung dieses Platzproblems wurde bereits versucht, zahlreiche Bedienfunktionalitäten gleichzeitig mittels eines einzigen Bedienmittels zu realisieren, mit welchem die Funktionen z. B. in einer "Menüstruktur" ausgewählt werden können.

Diese Auswahl kann beispielsweise mittels mehrerer Tasten und/oder einer Art "Joystick" erfolgen. Nachteilig ist hierbei, dass eine solche Auswahl von Bedienfunktionen eher zeitraubend ist und den Fahrer somit übermäßig ablenkt.

Vor allem für hinsichtlich der Fahrsicherheit als weniger wichtig zu erachtende und insbesondere eher selten zu betätigende Bedienelemente ist man bei deren Anordnung auch bereits auf Bereiche des Fahrzeuginnenraums ausgewichen, die nicht im unmittelbaren Sichtbereich des Fahrers liegen. Beispiele hierfür sind bei Kraftfahrzeugen die Bedienung von elektrischen Fensterhebern durch Bedienelemente an einer fahrerseitigen Türinnenverkleidung, die Bedienung elektrisch verstellbarer Außenspiegel durch Bedienelemente an einer in Querrichtung des Fahrzeugs betrachtet mittig neben dem Fahrersitz angeordneten Armauflagekonsole oder die Bedienung eines Dachöffnungssystems (z. B. Schiebe-Hebedach, Lamellendach etc.) durch Bedienelemente im Fahrzeugdachbereich. Nachteilig ist hierbei, dass die Bedienung den Fahrer leicht ablenkt und eine so genannte "blinde Bedienung" schwierig ist bzw. eine entsprechende Routine des Bedieners erfordert.

Bei den bekannten Bedienelementen, deren Funktion auf Drücken, Ziehen oder Drehen eines Betätigungsorgans beruht, ist es ferner nachteilig, dass diese Bedienelemente einem mehr oder weniger großen Verschleiß von mechanischen Teilen unterliegen. Unabhängig davon muss deren Design im Allgemeinen dem Innenraum des betreffenden Fahrzeugs sorgfältig angepasst werden. Insofern handelt es sich in der Praxis zumeist nicht um Standard-Bedienelemente sondern aufwändig konstruierte und designte Bauteile und Baugruppen. Die Anordnung einzelner Bedienelemente oder Bedienelementbaugruppen besitzt darüber hinaus den Nachteil, dass eine Varianz der Fahrzeugausstattung (z. B. mit oder ohne Schiebedach, mit oder ohne elektrischer Außenspiegelverstellung etc.) eine entsprechende Varianz der entsprechenden Innenraumverkleidungsteile oder Konsolen nach sich zieht, die zur Unterbringung dieser Bedienelemente bzw. der für das spezielle Fahrzeugmodell gewünschten Kombination von Bedienelemten vorgesehen sind. Schließlich ist es für die Bedienung eines mechanisch zu betätigenden Bedienelements bei Dunkelheit schwierig, das Bedienelement "zu finden", vor allem wenn dieses nicht beleuchtet ist und/oder außerhalb des unmittelbaren Sichtbereichs des Bedieners angeordnet ist. In diesem Zusammenhang ist anzumerken, dass die permanente Beleuchtung (auch z. B. Hintergrundbeleuchtung) von Bedienlementen bei Dunkelheit von Fahrzeuginsassen oftmals als störend empfunden wird.

Aus der DE 196 49 573 A1 ist ein Eingabegerät, insbesondere ein Computer-Eingabegerät, bekannt, mit dem Handbewegungen erfasst und zu Endgeräten übertragen werden können. Das bekannte Gerät kann beispielsweise zur Steuerung eines Mauszeigers bei einem Textverarbeitungsprogramm eingesetzt werden, wobei zweidimensionale Bewegungen als Druckpunktverlagerung auf einer piezosensorischen Fläche erfasst werden.

Aus der DE 43 12 672 A1 ist ein berührungsloses, mauskompatibles Zeigereingabegerät zur Steuerung der Bewegung eines Cursors oder eines Zeigers auf einem Bildschirm bekannt, wobei beispielsweise anstelle einer Computermaus die Hand oder ein Finger des Bedieners in der Nähe eines Sensorfeldes bewegt wird.

Aus der DE 42 01 934 A1 ist ein Datenverarbeitungssystem bekannt, welches durch Ausdrucksformen der menschlichen Gestik gesteuert wird, und zwar durch Aufnahme von Bildern des menschlichen Körpers oder von Teilen davon und Übersetzung von daraus extrahierten Ausdrucksformen in Befehle zur Steuerung des Datenverarbeitungssystems.

Im Internetauftritt "www.elmos.de" wurden im Mai 2003 ASIC-Produkte der Firma Elmos Semiconductor AG präsentiert. Hierbei wurde mit Bezug auf ein Produkt mit der Bezeichnung E909.01 ("Optical Switch with High Ambient Light Immunity") eine auf einem optischen Erfassungsprinzip beruhende Schaltereinrichtung beschrieben, mit welcher durch eine transluzente Fläche hindurch eine Annäherung eines Fingers, eine Berührung der Fläche durch den Finger oder eine Bewegung des Fingers an der Fläche erfasst werden kann.

Ähnliche Sensorbedienelemente wurden im Internetauftritt "www.mechaless.de" im Mai 2003 dargestellt und beschrieben, wie z. B. optische Annäherungssensoren, optische Schalter und optische Schieberegler, bei denen sich die Sensorik verdeckt hinter einer Oberfläche des Elements befindet.

Aus der DE 199 11 592 A1 ist ein manuell betätigtes Antriebssystem für einen motorisch verstellbaren Deckel eines Fahrzeugschiebedachs bekannt. Als Bedieneinrichtung zur Bedienung des Deckels sind zwei Kraftsensoren am Deckel vorgesehen, welche die von einem Benutzer manuell eingeleitete Betätigungskraft, mit welcher der Benutzer den Deckel verstellen will, erfassen. Dabei ist einer der Kraftsensoren zum Erfassen der Betätigungskraft in Öffnungsrichtung und der andere Kraftsensor zum Erfassen der Betätigungskraft in Schließrichtung vorgesehen. Vorzugsweise sind die beiden in einer Griffmulde angeordneten Kraftsensoren als Piezosensoren ausgebildet. Das von den Kraftsensoren abgegebene Signal wird einer Steuereinheit zugeführt, welche eine Antriebseinheit für das Antreiben des verstellbaren Deckels steuert.

Ein Fahrzeugdach nach dem Oberbegriff des Anspruchs 1 ist aus der DE 100 22 321 A1 bekannt. Die Bedieneinrichtung dieses bekannten Fahrzeugdaches umfasst eine Beleuchtungseinrichtung zum Aussenden von nicht sichtbarem Licht in ein Beobachtungsfeld sowie eine Aufnahmeeinrichtung (z. B. CCD-Kamera), die nicht sichtbares Licht aus dem Beobachtungsfeld aufnimmt und einer Recheneinheit zuleitet, so dass nach Erkennung einer Handstellung bzw. Handgestik eine Fahrzeugfunktion angesteuert werden kann.

Ein wesentlicher Vorteil eines gattungsgemäßen Fahrzeugdaches besteht darin, dass ein Erfassungsbereich einer zur Erfassung vorgesehenen Sensorflächenanordnung, in der DE 100 22 321 A1 beispielsweise die Beleuchtungs/Aufnahmeeinrichtung, anders als bei herkömmlichen zu drückenden, zu ziehenden oder zu drehenden Betätigungsorganen komfortabel "berührungslos" bedient werden können. Dementsprechend ergibt sich vorteilhaft auch kein mechanischer Verschleiß.

Nachteilig ist bei dem Fahrzeugdach gemäß der DE 100 22 321 A1 jedoch die gegenüber mechanischen Betätigungselementen erhöhte Gefahr einer unbeabsichtigten Betätigung.

Ausgehend von dem gattungsgemäßen Stand der Technik ist es daher eine Aufgabe der vorliegenden Erfindung, eine unbeabsichtigte Betätigung zu vermeiden, z. B. wenn der Benutzer mit seiner Hand eine Funktionsfläche der Sensorflächenanordnung "sucht".

Diese Aufgabe wird gelöst mit einem Fahrzeugdach nach Anspruch 1. Die abhängigen Ansprüche betreffen vorteilhafte Weiterbildungen der Erfindung.

Durch Erfassung der Anwesenheit und/oder Bewegung einer Hand oder eines Teils einer Hand des Insassen kann eine ergonomisch vorteilhafte Bedienung mit geringeren Anforderungen an die Genauigkeit des manuellen Bedienvorgangs (Feinmotorik) realisiert werden, die daher mehr oder weniger "blind" erfolgen kann. Dies ist insbesondere für den Fahrer eines Fahrzeugs komfortabel und sicher, da dessen Aufmerksamkeit hinsichtlich des Verkehrsgeschehens durch die Bedienung wenig beeinträchtigt wird. Der "Erfassungsbereich", also derjenige Raumbereich, in dem eine Erfassung von Bedienhandlungen aufgrund des Aufbaus der verwendeten Sensorik stattfinden kann, erstreckt sich von der Oberfläche der Sensorflächenanordnung einige cm nach unten, so dass auch "berührungslose" Erfassungsvorgänge ermöglicht sind. Für die Erfindung wesentlich ist des Weiteren, dass die Sensorflächenanordnung wenigstens eine konkav gewölbte und/oder in einer Vertiefung angeordnete Funktionsfläche aufweist, wobei die Wölbung bzw. Vertiefung so dimensioniert ist, dass die Betätigung dieser Funktionsfläche zur Erfassung einer Weiteren Bedienhandlung einen Eingriff der Hand bzw. des Teils der Hand in die Sensorflächenanordnung erfordert. Mit der Erfindung wird also eine besonders komfortabel zu betätigende Bedieneinrichtung im Dachbereich eines Fahrzeugs bereitgestellt. Hierbei kann durch geeignete Zuordnung zwischen bestimmten Bedienhandlungen und bestimmten Ansteuerfunktionen eine eher "intuitive" Bedienmöglichkeit realisiert werden. Die Bedienung der angesteuerten Komponenten, z. B. Leuchteinheiten und Dachöffnungssystemkomponenten, kann durch einfache Annäherung oder Berührung von Flächen (Funktionsflächen) erfolgen. Die Annäherung kann als einfache Erkennung der Hand oder der Finger des Bedieners in der Umgebung der Sensorflächenanordnung vorgesehen sein. Durch die Erfindung kann in konstruktiv einfacher Weise sogar eine Gestenerkennung realisiert werden, wenn z. B. eine "Hand-Wischbewegung" an oder nahe einer Funktionsfläche als eine Bedienhandlung vorgesehen ist.

Darüber hinaus erfordert die Bedieneinrichtung keine verschleißanfälligen mechanischen Elemente und die Sensorflächenanordnung der Bedieneinrichtung lässt sich in der Praxis gut an einen Fahrzeugsinnenraum anpassen. Letzteres sowohl im Hinblick auf das Design als auch im Hinblick auf die Konstruktion.

In einer bevorzugten Ausführungsform ist die Bedieneinrichtung wenigstens zur Bedienung eines Dachöffnungssystems und/oder eines Dachabschattungssystems und/oder eines Innenbeleuchtungssystems vorgesehen. Dabei ergibt sich der Vorteil, dass eine besonders intuitive Bedienung ermöglicht wird, und zwar einerseits aufgrund der räumlichen Nähe der zu bedienenden Komponenten und der hierfür vorgesehenen Bedieneinrichtung und andererseits aufgrund der Möglichkeit einer sinnfälligen Korrespondenz zwischen Betätigungsbewegungen und Bewegungsfunktionen der genannten Komponenten.

Eine besonders gute Zugänglichkeit der Bedieneinrichtung wird beispielsweise dann erreicht, wenn diese in Querrichtung des Fahrzeugs betrachtet etwa mittig angeordnet ist, beispielsweise mittig im Übergangsbereich zwischen dem Fahrzeugdach und einer Windschutzscheibe eines Kraftfahrzeugs. Vor allem in diesem Bereich läßt sich die Bedieneinrichtung als Bedieneinheit bzw. Bedienkonsole mit einer von der Sensorflächenanordnung ausgebildeten Sichtseite gut an das betreffende Innenraumdesign anpassen. In einer bevorzugten Ausführungsform ist die Sensorflächenanordnung als einstückiges Kunststofformteil gebildet. Insbesondere kann mit der Erfindung eine Bedieneinheit für Dachöffnungs- und Innenbeleuchtungssysteme zur Integration in ein Dachmodul für Kraftfahrzeuge geschaffen werden.

Bevorzugt weist die Sensorflächenanordnung eine Mehrzahl von verdeckt (unsichtbar) angeordneten Sensorelementen auf. Mit dem Begriff "Sensorelement" ist hierbei ein Sensor gemeint, der einen Teil der insgesamt gewünschten Erfassungsfunktionalität realisiert und unabhängig von weiteren Sensoren bereits ein Sensorsignal bereitstellen kann.

Falls eine Mehrzahl von Sensorelementen vorgesehen ist, so wirken diese Elemente bevorzugt zumindest bei einem Teil der vorgesehenen Erfassungen zusammen. Die Erfassung kann beispielsweise optisch (insbesondere Infrarotoptisch), kapazitiv, oder mittels Ultraschall erfolgen. Derartige Erfassungsprinzipien an sich sind aus dem Stand der Technik wohlbekannt, so dass hierauf nicht im Detail eingegangen werden muss. Beispielhaft ist auf die eingangs erwähnten Veröffentlichungen zum Stand der Technik zu verweisen, in denen geeignete Erfassungsprinzipien erläutert sind.

Die Anordnung einer Mehrzahl von Sensorelementen ist in mehrfacher Hinsicht vorteilhaft. Zunächst ist es damit möglich, einzelnen der gewünschten Bedienungsfunktionen jeweils ein eigenes, an oder hinter einer "Funktionsfläche" angeordnetes Sensorelement zuzuordnen und damit eine "Mulitfunktionalität" der Bedieneinrichtung zu erzielen. Des weiteren können auch für ein und dieselbe Bedienfunktion mehrere Sensorelemente vorgesehen sein, um durch eine gewisse Redundanz bei der Erfassung die Erfassungsgenauigkeit zu erhöhen und/oder hinsichtlich einer bestimmten Bedienfunktion die Aufgaben zur Erfassung eines entsprechenden Bedienvorgangs auf mehrere Sensorelemente zu verteilen. Beispielsweise kann die Erfassung eines Fingerdrucks auf einen Abschnitt der Sensorflächenanordnung mittels einer Kombination eines optischen Annäherungssensors mit einem kapazitiven oder piezoelektrischen Drucksensor erfasst werden. Schließlich ist die Anordnung einer Mehrzahl von Sensorelementen auch von Vorteil, wenn für eine bestimmte Bedienfunktion ein räumlich ausgedehnter Erfassungsbereichabschnitt bei gleichzeitig möglichst gleichmäßiger Erfassungsempfindlichkeit in diesem Erfassungsbereichabschnitt erzielt werden soll. Beispielsweise können mehrere identische, jeweils nur kurzreichweitig erfassende Sensorelemente flächig verteilt angeordnet sein (z. B. über die Ausdehnung einer Funktionsfläche), um die Erfassungsempfindlichkeit hinsichtlich dieser Bedienfunktion räumlich stärker "auszudehnen" (der sensitive Bereich der Sensoren ist auf eine größere Fläche verteilt). Schließlich ist die Anordnung einer Mehrzahl von einfachen Sensorelementen, die jeweils lediglich die Anwesenheit oder Annäherung erfassen können, zur Erfassung der Bewegung (Richtung und/oder Geschwindigkeit) vorteilhaft nutzbar. Auf diese Weise kann beispielsweise mit zwei Sensorelementen welche lediglich die Anwesenheit oder den Abstand einer Hand erfassen können eine "Wischbewegung" der Hand in Richtung einer gedachten Verbindungslinie zwischen den zwei Sensorelementen erfasst werden, indem die von den Sensorelementen ausgegebenen Sensorsignale gemeinsam ausgewertet werden und z. B. die Geschwindigkeit und Orientierung der Handbewegung ermittelt werden. Diese Funktion einer möglichst genauen Erfassung von (auch dreidimensionalen) Bewegungen der Hand des Bedieners oder von Teilen dieser Hand ist in der Praxis mit steigender Anzahl von verteilt angeordneten Sensorelementen noch besser erreichbar.

Für eine zuverlässige Erfassung und eine geringe Störanfälligkeit hat es sich als vorteilhaft herausgestellt, wenn das Fahrzeugdach, insbesondere die Bedieneinrichtung selbst (z. B. unmittelbar hinter der Sensorflächenanordnung) eine Auswertelektronik aufweist, mit welcher von Sensorelementen der Sensorflächenanordnung ausgegebene Sensorsignale ausgewertet werden können und abhängig vom Ergebnis dieser Auswertung das elektrische Ansteuersignal bereitgestellt werden kann. Damit werden auf die Ausgangssignale von Sensorelementen bei deren Übertragung wirkende Störeinflüsse (z. B. durch elektromagnetische Interferenz) weitgehend vermieden.

In einer Ausführungsform umfasst die Sensorflächenanordnung eine Mehrzahl von Sensorelementen, deren Ausgangssignale gemeinsam durch eine Auswerteelektronik ausgewertet werden, um abhängig vom Ergebnis dieser Auswertung das elektrische Ansteuersignal bereitzustellen, wobei jedes dieser Sensorelemente nicht einer bestimmten Fahrzeugkomponente zuordenbar ist sondern erst das bereitgestellte elektrische Ansteuersignal (gegebenenfalls auch abhängig von der "Bedienungsvorgeschichte") einer bestimmten Fahrzeugkomponente und Funktionalität dieser Fahrzeugkomponente zuordenbar ist.

In einer bevorzugten Ausführungsform weist die Sensorflächenanordnung wenigstens eine Funktionsfläche auf. Der Begriff "Funktionsfläche" soll einen flächig ausgedehnten Erfassungsbereichabschnitt bezeichnen, der insgesamt für eine Erfassung betreffend die Bedienung einer bestimmten Fahrzeugkomponente oder betreffend eine elementare Bedienfunktion vorgesehen ist. In diesem Sinne kann beispielsweise eine Funktionsfläche zur Bedienung eines Dachöffnungssystems (komponentenbezogene Funktionsfläche) vorgesehen sein. Auch kann eine Funktionsfläche zum Einschalten einer Innenraumleuchte und eine weitere Funktionsfläche zum Ausschalten derselben Innenraumleuchte (bedienfunktionbezogene Funktionsflächen) vorgesehen sein.

Ganz allgemein kann eine berührungslose Erfassung bei geringem Abstand zur Funktionsfläche und/oder eine Erfassung vorgesehen werden, bei der die Funktionsfläche berührt (Wischen oder Antippen) werden muss (etwa wie bei einem "Touchpad").

Es ist denkbar, dass die Zuordnung einer Funktionsfläche zu einer bestimmten Komponente oder Funktionalität von der "Bedienungsvorgeschichte" abhängt. Ein Beispiel hierfür wäre folgende Anordnung von zwei Funktionsflächen: Mit einer ersten Funktionsfläche wird durch (mehrmaliges) Antippen eine von mehreren Komponenten "ausgewählt", etwa ein bestimmter Außenspiegel, ein Sonnenrollo oder eine Innenraumleuchte. Die Auswahl kann dem Bediener akustisch und/oder visuell (Signalbeleuchtung) verdeutlicht werden. Sodann wird an einer zweiten Funktionsfläche durch eine "Hand-Wischbewegung" eine der Richtung dieser Bewegung zugeordnete Funktionalität der zuvor ausgewählten Komponente befehligt.

Eine Wölbung einer Funktionsfläche ist vorteilhaft im Hinblick auf eine blinde Bedienung und die Unterscheidung zwischen Funktionsflächen, wenn die Sensorflächenanordnung mehrere Funktionsflächen aufweist, wie dies zur Realisierung komplexerer Bedienfunktionen vorteilhaft sein kann. Alternativ oder zusätzlich zu einer Wölbung kann auch eine rauhe Oberflächenstruktur vorgesehen sein, um ein "Auffinden" der Funktionsfläche durch den haptischen Eindruck beim Bediener zu erleichtern.

Die vom Bediener aus betrachtet gemäß der Erfindung konkav gewölbte Funktionsfläche oder in einer Vertiefung angeordnete Funktionsfläche ermöglicht Ausführungsformen, bei welchen eine Betätigung der betreffenden Funktionsfläche schwerlich unbeabsichtigt erfolgen kann, beispielsweise wenn die Wölbung bzw. Vertiefung so dimensioniert ist, dass die Betätigung nicht durch die ganze Hand sondern lediglich durch einen Finger möglich ist.

Eine solche konkav gewölbte Funktionsfläche kann außerdem vorteilhaft bei der Erfassung einer "berührenden Wischbewegung" verwendet werden. In diesem Fall kann die Hand oder der Finger des Benutzers während der Bewegung durch die Form der Fläche gut geführt werden. Diese Führung besitzt dann zum einen den Vorteil, dass die zur Bedienung erforderliche Bewegungsbahn mehr oder weniger erzwungen wird und zum anderen durch die Wölbung am Ende der Bewegungsbahn die Hand oder der Finger wieder sanft vom Dachbereich weg gedrängt werden kann.

In einer bevorzugten Ausführungsform mit mehreren zu einer Sensorflächeneinheit zusammengefassten Funktionsflächen ist vorgesehen, dass einander benachbarte Funktionsflächen sich in ihrer Orientierung und/oder Wölbung und/oder Haptik unterscheiden. Auch ist es zur Vermeidung einer Fehlbedienung durch Verwechslung von Funktionsflächen vorteilhaft, wenn einander benachbarte Funktionsflächen durch unempfindliche "Separationsflächen" voneinander getrennt sind. Falls mehrere Funktionsflächen vorgesehen sind, so ist es schließlich bevorzugt, dass diese Flächenanordnung, insbesondere die Sensorflächenanordnung insgesamt, eine Symmetrieebene besitzt.

In einer weiteren Ausführungsform weist die Sensorflächenanordnung Mittel zur Bereitstellung von visuellen Bedienhinweisen auf. Denkbar sind z. B. entsprechende feste Beschriftungen und/oder Piktogramme auf der Sichtseite der Sensorflächenanordnung. Wenngleich solche Bedienhinweise einfach aufgedruckt sein können, so ist in einer bevorzugten Ausführungsform vorgesehen, dass wenigstens ein Teil dieser Bedienhinweise durch eine Hintergrundbeleuchtung einer entsprechenden Schablone sichtbar hervortreten, wobei diese Hintergrundbeleuchtung z. B. bei Annäherung (einer Hand) aktiviert wird (und dann bevorzugt eine vorbestimmte Zeitspanne aufrechterhalten wird), noch bevor irgendeine andere Bedienfunktion ausgelöst werden kann. Alternativ oder zusätzlich kann diese erste Annäherung auch dazu herangezogen werden, wenigstens die Sensorflächenanordnung zu beleuchten, sei es durch eine speziell hierfür vorgesehene Leuchte oder eine auch zur Beleuchtung des Innenraums ohnehin vorgesehene Leuchte.

In einer bevorzugten Ausführungsform umfasst das Fahrzeugdach, insbesondere die Bedieneinrichtung selbst, einen akustischen Signalgeber zur Ausgabe von akustischen Signalen in Reaktion auf Erfassungen ("akustisches Feedback"). Damit lässt sich beispielsweise die erfolgreiche Auswertung der mit einer Handbewegung verbundenen Sensorsignale, d. h. die Erkennung eines bestimmten Bedienbefehls akustisch bestätigen und/oder eine nicht erfolgreiche Auswertung, die dementsprechend keine Steuerfunktion auslöst, als Fehlbedienung akustisch mitteilen. Im einfachsten Fall kann es sich bei den akustischen Signalen um zwei verschiedene Klänge oder Töne handeln, um einen Bedienbefehl zu bestätigen oder als Fehlbedienung zurückzuweisen. Insbesondere bei komplexeren Bedienungsaufgaben ist für eine genauere Rückmeldung auch eine elektronische Sprachausgabe vorteilhaft einsetzbar.

Die Erfindung wird nachfolgend anhand einiger Ausführungsbeispiele mit Bezug auf die beigefügten Zeichnungen näher beschrieben. Es stellen dar:
- Fig. 1: eine Draufsicht eines Fahrzeugdaches zur Veranschaulichung der Anordnung einer erfindungsgemäßen Bedieneinrichtung,
- Fig. 2 und 3: perspektivische Ansichten von im Rahmen der Erfindung verwendbaren Sensorflächenanordnungen mit einer Funktionsfläche,
- Fig. 4: eine perspektivisch Ansicht einer im Rahmen der Erfindung verwendbaren Sensorflächenanordnung mit zwei Funktionsflächen,
- Fig. 5 und 7: perspektivische Ansichten von im Rahmen der Erfindung verwendbaren Sensorflächenanordnungen mit drei Funktionsflächen,
- Fig. 8 bis 12: schematische Darstellungen zur Veranschaulichung von im Rahmen der Erfindung verwendbaren Bedienkonzepten, nämlich

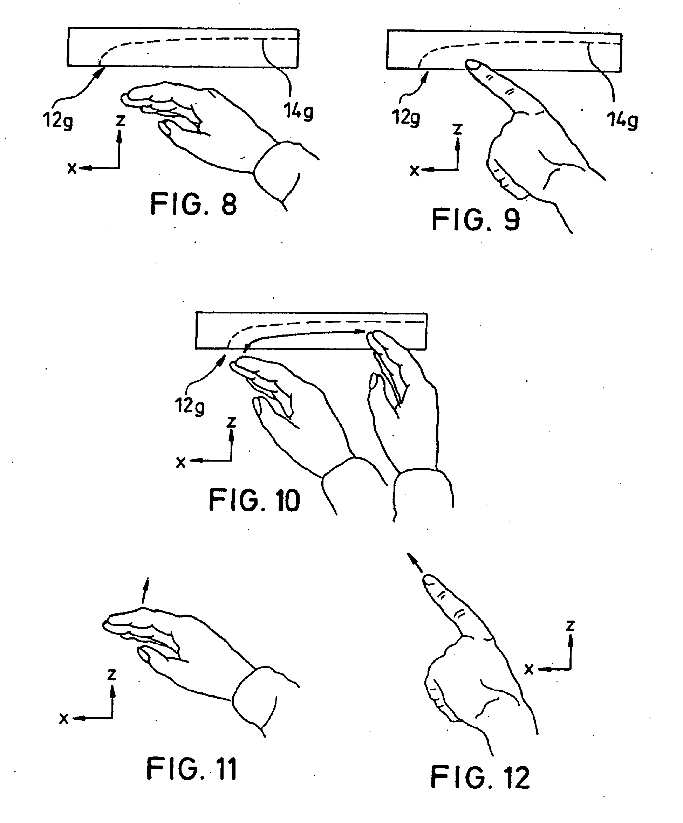

- Fig. 8: eine Darstellung betreffend die Annäherung an eine Sensorflächenanordnung,
- Fig. 9: eine Darstellung betreffend den Eingriff in eine Sensorflächenanordnung,
- Fig. 10: eine Darstellung betreffend eine Wischbewegung an einer Sensorflächenanordnung,
- Fig. 11: eine Darstellung betreffend ein Antippen einer Sensorflächenanordnung mit dem Handrücken, und
- Fig. 12: eine Darstellung betreffend ein Antippen einer Sensorflächenanordnung mit einem Finger.

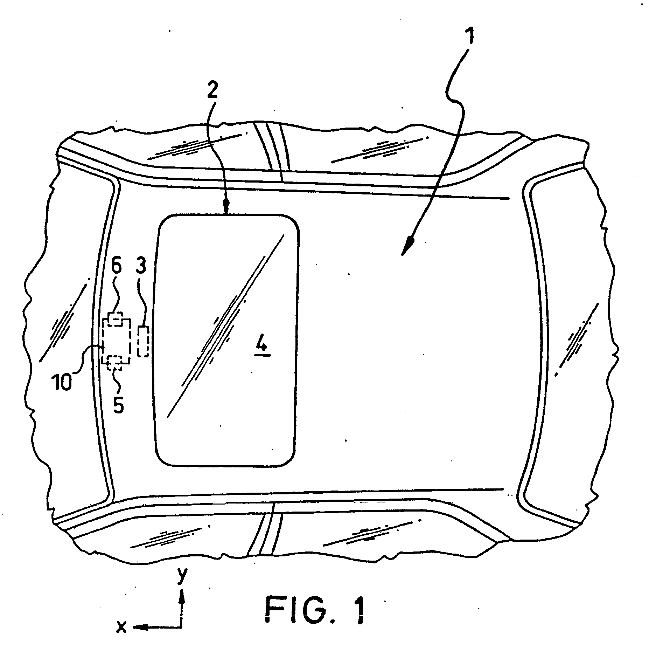

Fig. 1 zeigt ein insgesamt mit 1 bezeichnetes Fahrzeugdach eines Kraftfahrzeugs mit einem Schiebedach 2, das in an sich bekannter Weise mittels eines bei 3 angedeuteten elektrischen Antriebs zum Öffnen und Schließen eines Dachausschnitts mittels eines Schiebedeckels 4 betätigbar ist. Ferner ist in der Figur eine linke Innenraumleuchte 5 sowie eine rechte Innenraumleuchte 6 zu erkennen, die in an sich bekannter Weise an der Unterseite des Fahrzeugdaches 1 zwischen dem vorderen Dachrand und dem Dachausschnitt angeordnet sind.

In der Figur eingezeichnet sind auch Richtungen, auf die unten noch Bezug genommen wird, nämlich eine Fahrzeuglängsrichtung x, eine Fahrzeugquerrichtung y und eine Fahrzeugvertikalrichtung z.

Das Schiebedach 2 bzw. dessen elektrischer Antrieb 3 und die Innenraumleuchten 5, 6 sind Komponenten der Fahrzeugelektrik, die mittels einer ebenfalls an der Unterseite des Fahrzeugdaches 1 angeordneten Bedieneinrichtung 10 angesteuert werden können. Zu diesem Zweck umfasst die Bedieneinrichtung 10 eine zum Fahrzeuginnenraum nach unten hin durch einen Abschnitt eines Innenhimmels hindurch freiligende Sensorflächenanordnung zur Erfassung der Anwesenheit bzw. Annäherung und Bewegung einer Hand oder eines Fingers der bedienenden Person. Mittels dieser Sensorflächenanordnung können die Funktionen der Fahrzeugkomponenten 3, 5, 6 komfortabel durch den Fahrer bedient werden, der hierzu lediglich vorbestimmte Hand und/oder Fingerbewegungen in einem Erfassungsbereich der Sensorflächenanordnung ausführen muss, was selbst während der Fahrt und auch bei Dunkelheit nur wenig Aufmerksamkeit vom Fahrer erfordert.

Abweichend vom dargestellten Ausführungsbeispiel könnte die Bedieneinrichtung 10 auch zur Ansteuerung weiterer oder anderer Fahrzeugkomponenten vorgesehen sein. Außerdem könnte die Bedieneinrichtung 10 auch an einer anderen geeigneten Stelle, d. h. einer durch den Fahrer oder andere Insassen des Fahrzeugs zugänglichen Stelle, an der Unterseite des Fahrzeugdaches 1 angeordnet sein. Beispielsweise könnte zur Bedienung von weiter hinten im Fahrzeuginnenraum angeordneten Beleuchtungseinrichtungen alternativ oder zusätzlich eine Bedieneinrichtung hinter dem Schiebedach 2 vorgesehen sein, die komfortabel durch Fondpassagiere bedient werden kann.

Vorteilhaft werden bei der Bedienung der Sensorflächenanordnung keine mechanischen Teile bewegt, so dass die Bedieneinrichtung in dieser Hinsicht verschleißfrei arbeitet. Eine oder mehrere Sensorflächenanordnungen lassen sich ästhetisch ansprechend in einen ohnehin vorhandenen Innenhimmel des Fahrzeugs integrieren oder können als Abschnitt eines solchen Innenhimmels vorgesehen sein. Für eine einfache Fahrzeugmontage ist es vorteilhaft, wenn das Fahrzeugdach als so genanntes vorgefertigtes Dachmodul ausgebildet ist, welches beim fertigen Fahrzeug im Dachbereich angeordnete Fahrzeugkomponenten, insbesondere das bei diesem Ausführungsbeispiel vorgesehene Dachöffnungssystem 2 bereits integriert aufweist. In diesem Fall kann auch die Bedieneinrichtung bereits im Rahmen der Vorfertigung des Dachmoduls integriert werden.

Bei der nachfolgenden Beschreibung von weiteren Ausführungsbeispielen werden für analoge Teile die gleichen Bezugszahlen verwendet, jeweils ergänzt durch einen kleinen Buchstaben zur Unterscheidung der Ausführungsform. Dabei wird im Wesentlichen nur auf die Unterschiede zu dem bzw. den bereits beschriebenen Ausführungsbeispielen eingegangen und im Übrigen hiermit ausdrücklich auf die Beschreibung vorangegangener Ausführungsbeispiele verwiesen. Die Bezugszahlen von in einer Ausführungsform mehrfach vorgesehenen, in ihrer Wirkung jedoch analogen Teile, sind durchnumeriert (jeweils ergänzt durch einen Bindestrich und eine fortlaufende Zahl). Auf einzelne solcher Teile oder auf die Gesamtheit solcher Teile wird im Folgenden auch durch die nicht ergänzte Bezugszahl Bezug genommen.

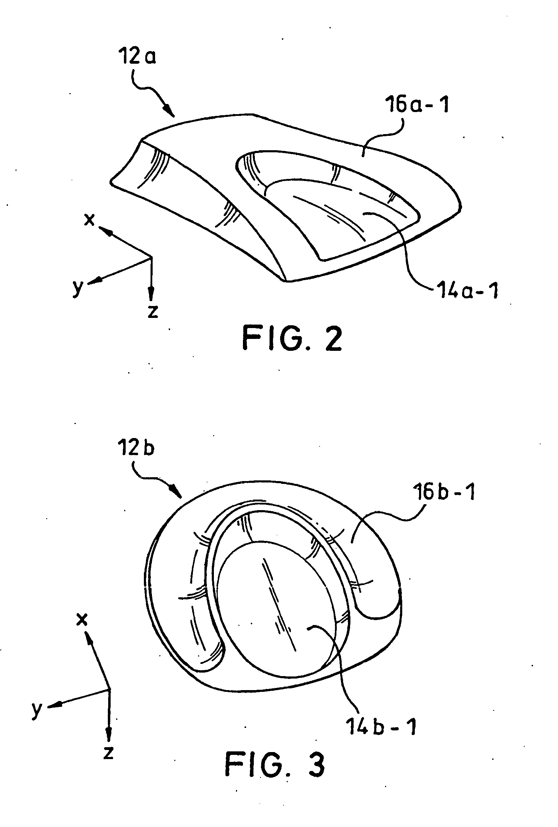

Die Fig. 2 bis 7 veranschaulichen beispielhaft einige Ausführungsformen einer für die Erfindung geeigneten, einstückig aus Kunststoff hergestellten Sensorflächenanordnung, wie sie z. B. für die in Fig. 1 dargestellte Bedieneinrichtung 10 vorgesehen sein kann. In diesen Figuren nicht dargestellt ist die verwendete Sensorik, die in Form einer verteilt über (in positiver z-Richtung) der Sichtseite angeordneten Sensoranordnung samt Auswerteelektronik vorgesehen ist.

Fig. 2 zeigt eine Sensorflächenanordnung 12a mit einer Funktionsfläche 14a-1 im mittleren hinteren Bereich sowie einer davor etwa U-förmig sich anschließenden Separationsfläche 16a-1. In x-Richtung betrachtet steigt (in negativer z-Richtung) die Separationsfläche 16a-1 in einem Winkel von etwa 20° an und ist größtenteils mehr oder weniger eben, wohingegen die Funktionsfläche 14a-1 eine weitgehend gekrümmte Muldenfläche ausbildet, deren vorderer Übergangsbereich (zur Separationsfläche 16a-1 hin) in z-Richtung betrachtet etwa parabelförmig verläuft. Der Übergang zwischen den Flächen 14a-1 und 16a-1 bildet zumindest im vorderen Teil der Flächenanordnung eine etwa rechtwinklige Kante.

Fig. 3 zeigt eine Sensorflächenanordnung 12b mit einer konkaven etwa halbellipsoidförmigen Funktionsfläche 14b-1, die nach vorne hin von einer in z-Richtung betrachtet etwa U-förmigen Separationsfläche 16i-1 umgeben ist, wobei der Übergangsbereich zwischen diesen beiden Flächen einen erhabenen U-förmigen Kragen bildet.

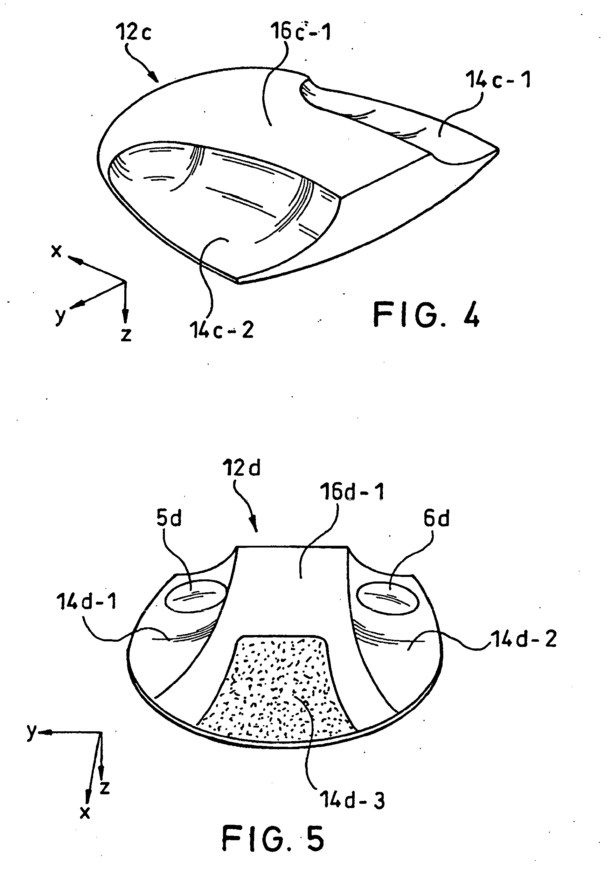

Fig. 4 zeigt eine Sensorflächenanordnung 12c mit einer im Zentrum erhaben und geringfügig konvex gekrümmt verlaufenden Separationsfläche 16c-1, an welche sich in Querrichtung betrachtet beiderseits konkav gekrümmte Funktionsflächen 14c-1 und 14c-2 über einen etwa rechtwinklig abgewinkelten Übergangsbereich anschließen. An den hinteren äußeren Bereichen der Sensorflächenanordnung 12c laufen die Funktionsflächen 14c flach in die Ebene des (nicht dargestellten) umgebenden Innenhimmels.

Fig. 5 zeigt eine Sensorflächenanordnung 12d mit einer erhabenen Separationsfläche 16d-1, die im Zentrum einen etwa quadratischen Flächenabschnitt aufweist, an den sich in Querrichtung betrachtet beiderseits über einen etwa unter 45° abgewinkelten Übergangsbereich die Funktionsflächen 14d-1, 14d-2 anschließen und nach vorne hin ebenfalls über einen abgewinkelten Übergangsbereich zunächst ein weiterer Flächenabschnitt der Separationsfläche 16d-1 anschließt. Letzterer Abschnitt der Separationsfläche 16d-1 ist geringfügig konkav gekrümmt und etwa U-förmig, wobei ein flacher Übergang von der U-Form zur dritten Funktionsfläche 14d-3 erfolgt. Ferner ist ersichtlich, dass Innenraumleuchten (hier Leseleuchten) 5d und 6d in die Funktionsflächen 14d-1, 14d-2 integriert sind. Die Bedienung dieser Komponenten 5d, 6d erfolgt in intuitiv einfacher Weise über diese Funktionsflächen 14d-1 bzw. 14d-2. Die Funktionsfläche 14d-3 besitzt über deren gesamte Ausdehnung eine rauhe Oberflächenstruktur, die insbesondere bei Dunkelheit gut mit den Fingern zu ertasten ist. Bei den Innenraumleuchten 5d, 6d ist die Sensorik gewissermaßen in die Leuchten eingebaut (Leuchte und Bedienmittel bilden eine Einheit). Bei Annäherung der Hand oder des Fingers an die Funktionsflächen 14d-1, 14d-2 kann z. B. die entsprechende Leuchte 5d bzw. 6d mit geringer Leuchtstärke eingeschaltet werden. Somit ist eine Suchbeleuchtung überflüssig.

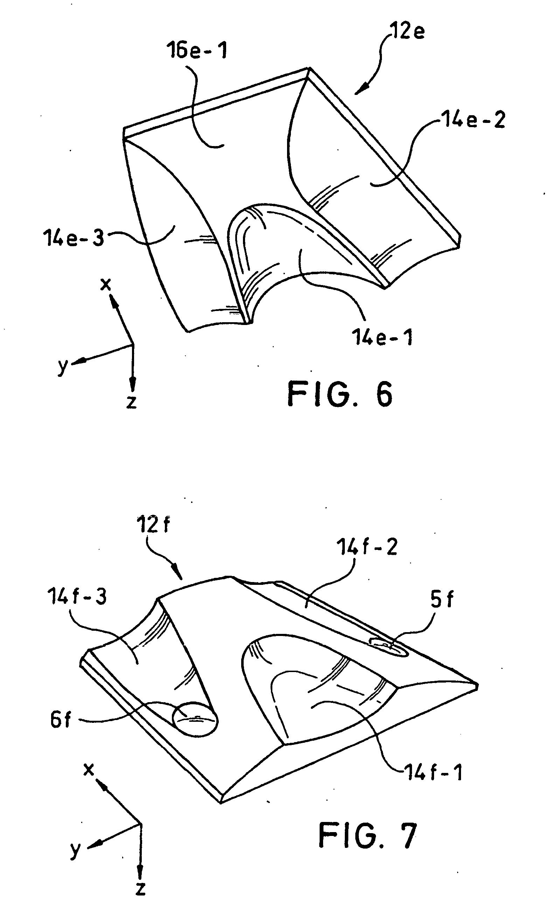

Fig. 6 zeigt eine Sensorflächenanordnung 12e mit einer Funktionsfläche 14e-1 im mittleren hinteren Bereich, die eine größtenteils konkav gekrümmt verlaufende Muldenfläche mit vorne, in z-Richtung betrachtet, etwa parabelförmig verlaufenden Übergangsbereich zu einer Separationsfläche 16e-1 dargestellt. Diese Separationsfläche 16e-1 setzt sich beiderseits der Funktionsfläche 14e-1 etwa eben zu in x-Richtung verlaufenden, schmalen Gratflächen an einem "Kragen" fort. Über die in x-Richtung betrachtet gesamte Ausdehnung der Sensorflächenanordnung 12e sind an den seitlichen Rändern dieser Anordnung zwei weitere konkav eingebuchtete Funktionsflächen 14e-2 und 14e-3 vorgesehen. Die beiden Funktionsbereiche 14e-2, 14e-3 einerseits (z. B. für Licht) und 14e-1 andererseits (z. B. für Dachsystem) sind durch den Kragen formal voneinander getrennt. Dies hat eine sanfte Führung der Hand bzw. der Finger im Bereich der Fläche 14e-1 zur Folge. Insbesondere der Innenbereich (Bedienung Dachsystem) folgt mit seiner konkaven Form der natürlichen Bewegung aus dem Handgelenk. Der Kragenbereich der konkaven Fläche weist einen steileren Winkel auf. Dies hat vorteilhaft zur Folge, dass die Hand zum Kragen in der Bewegung abgebremst wird.

Fig. 7 zeigt eine Senorflächenanordnung 12f ähnlich der in Fig. 6 gezeigten Anordnung 12e, wobei jedoch die äußeren Funktionsflächen 14f-2 und 14f-3 sich nach vorne hin in ihrer Querausdehnung verbreitern anstatt zu verjüngen. Außerdem sind bei dieser Ausführungsform wieder Innenraumleuchten 5f und 6f innerhalb der Funktionsflächen 14f-2, 14f-3 integriert.

Mit Bezug auf die Fig. 8 bis 12 werden nachfolgend einige im Rahmen der Erfindung interessante Bedienhandlungen erläutert.

Fig. 8 zeigt schematisch eine Sensorflächenanordnung 12g mit einer vertieft verlaufenden, bei 14g angedeuteten Funktionsfläche, deren Sensorik die Annäherung einer Hand bereits in relativ großem Abstand (beispielsweise etwa 5 cm) erfasst und mittels einer Auswerteelektronik in ein Bedien-Ansteuersignal umsetzt, beispielsweise zum Einschalten einer Innenbeleuchtungseinrichtung mit geringer Intensität ("Dimmlicht").

Fig. 9 veranschaulicht eine weitere Bedienhandlung an derselben Sensorflächenanordnung 12g, nämlich eine Annäherung an die Funktionsfläche 14g auf einen wesentlich geringeren Abstand, wie dies praktisch nur durch einen "Eingriff' in die Sensorflächenanordnung 12g möglich ist. Indem die Funktionsfläche 14g als Grund einer in ihren Querausdehnungsrichtungen relativ kleinen Einbuchtung gestaltet wird, lässt sich beispielsweise vorsehen, dass ein solcher Eingriff nur mit einem Finger, nicht jedoch mit dem ganzen Handrücken erfolgen kann. Dies ist zur Vermeidung einer unbeabsichtigten Auslösung der mit dieser Bedienhandlung verbundenen Ansteuerfunktion vorteilhaft.

Fig. 10 veranschaulicht zwei weitere Bedienhandlungen an derselben Sensorflächenanordnung 12g, nämlich ein "Wischen vorwärts" (in positiver x-Richtung) und ein "Wischen rückwärts" (in negativer x-Richtung). Solche durch eine Bewegungsrichtung charakterisierte Bedienhandlungen lassen sich vorteilhaft zur Realisierung von intuitiven Bedienfunktionen nutzen, die mit einer korrespondierenden Bewegungsrichtung verknüpft sind. Bei dem in Fig. 1 dargestellten Fahrzeug könnte beispielsweise mit der Wischbewegung nach vorne ein Schließen des Schiebedaches 2, also eine Bewegung des Schiebedeckels 4 nach vorne, befehligt werden und mit einer Wischbewegung nach hinten dementsprechend ein Öffnen des Schiebedaches 2 befehligt werden. Falls abweichend von dem in Fig. 1 dargestellten Ausführungsbeispiel ein transparenter Deckel für das Dachöffnungssystem vorgesehen ist, so könnte die Wischbewegung nach vorne bei geöffnetem Dach eine entsprechende Schließbewegung einer zugeordneten Abschattungseinrichtung (wie einem Rollo) befehligen und bei bereits abgeschattetem Dachausschnitt die Schließbewegung des transparenten Schiebedeckels befehligen. Umgekehrt könnte bei einer Wischbewegung nach hinten bei geschlossenem und abgeschattetem Dachausschnitt zunächst die Abschattungseinrichtung im Sinne einer Freigabe der Dachöffnung betätigt werden und bei nochmaligen Wischen nach hinten erst der Dachausschnitt geöffnet werden.

Unabhängig von einer konkreten Gestaltung der Bedieneinrichtung veranschaulichen die Fig. 11 und 12 die Ausführung weiterer Bedienhandlungen, nämlich ein Antippen einer Funktionsfläche mit dem Handrücken (Fig. 11) sowie ein Antippen einer Funktionsfläche mit einem Finger (Fig. 12).

Eine einfache Anwendung der Erfindung besteht z. B. in folgendem Bedienkonzept: Eine Funktionsfläche für das Dachöffnungssystem ist in einer Mulde einer Dachkonsole untergebracht. Die Form der Mulde folgt der Form und der natürlichen Bewegung der Hand.

Mit dieser Anordnung ist z. B. folgende Bedienung des Dachöffnungssystems möglich:
- Automatisches Öffnen nach einer Wischbewegung rückwärts
- Automatisches Schließen nach einer Wischbewegung vorwärts
- Stoppen einer automatischen Bewegung durch Antippen
- Komplettes Schließen des Dachöffnungssystems nach Doppeltipp

### Bezugszeichenliste

- 1: Fahrzeugdach
- 2: Schiebedach
- 3: Elektrischer Antrieb
- 4: Schiebedeckel
- 5: Innenraumleuchte links
- 6: Innenraumleuchte rechts
- 10: Bedieneinrichtung
- 12: Sensorflächenanordnung
- 14: Funktionsfläche
- 16: Separationsfläche

## Patentansprüche

1. Fahrzeugdach mit einer Bedieneinrichtung (10) zur Bedienung wenigstens einer elektrischen Fahrzeugkomponente (2, 3, 5, 6) durch einen Insassen des Fahrzeugs,
wobei die Bedieneinrichtung eine Sensorflächenanordnung (12) zur Erfassung der Anwesenheit und/oder Bewegung einer Hand oder eines Teils einer Hand des Insassen in einem Erfassungsbereich der Sensorflächenanordnung (12) aufweist und zur Bereitstellung eines elektrischen Ansteuersignals auf Basis der Erfassung zur Ansteuerung der wenigstens einen Fahrzeugkomponente (2, 3, 5, 6) ausgebildet ist,
und wobei der Erfassungsbereich der Sensorflächenanordnung (12) sich von der Oberfläche der Sensorflächenanordnung (12) weg einige cm nach unten erstreckt, so dass berührungslose Erfassungsvorgänge zur Erfassung einer Bedienhandlung ermöglicht sind,
**dadurch gekennzeichnet, dass** die Sensorflächenanordnung (12) wenigstens eine konkav gewölbte und/oder in einer Vertiefung angeordnete Funktionsfläche (14) aufweist, wobei die Wölbung bzw. Vertiefung so dimensioniert ist, dass die Betätigung dieser Funktionsfläche (14) zur Erfassung einer weiteren Bedienhandlung einen Eingriff der Hand bzw. des Teils der Hand in die Sensorflächenanordnung (12) erfordert.

2. Fahrzeugdach nach Anspruch 1, wobei die Wölbung bzw. Vertiefung so dimensioniert ist, dass die Betätigung der Funktionsfläche (14) nicht durch die ganze Hand sondern lediglich durch einen Finger möglich ist.

3. Fahrzeugdach nach Anspruch 1 oder 2, wobei die Bedieneinrichtung (10) wenigstens zur Bedienung eines Dachöffnungssystems (2, 3) und/oder eines Dachabschattungssystems und/oder eines Innenbeleuchtungssystems (5, 6) vorgesehen ist.

4. Fahrzeugdach nach einem der Ansprüche 1 bis 3, wobei die Bedieneinrichtung (10) in Querrichtung (y) des Fahrzeugs betrachtet mittig angeordnet ist.

5. Fahrzeugdach nach einem der Ansprüche 1 bis 4, wobei die Sensorflächenanordnung (12) eine Mehrzahl von verdeckt angeordneten Sensorelementen aufweist.

6. Fahrzeugdach nach einem der Ansprüche 1 bis 5, wobei die Erfassung optisch und/oder kapazitiv und/oder mittels Ultraschall und/oder mittels Piezosensorik erfolgt.

7. Fahrzeugdach nach einem der Ansprüche 1 bis 6, umfassend eine Auswertelektronik, um von Sensorelementen der Sensorflächenanordnung (12) ausgegebene Sensorsignale auszuwerten und abhängig vom Ergebnis dieser Auswertung das elektrische Ansteuersignal bereitzustellen.

8. Fahrzeugdach nach einem der Ansprüche 1 bis 7, wobei die Funktionsfläche (14) zur Erfassung einer "berührenden Wischbewegung" verwendet wird.

9. Fahrzeugdach nach einem der Ansprüche 1 bis 8, wobei die Sensorflächenanordnung (12) mehrere Funktionsflächen (14) aufweist.

10. Fahrzeugdach nach einem der Ansprüche 1 bis 9, wobei die Sensorflächenanordnung (12) Mittel zur Bereitstellung von visuellen Bedienhinweisen aufweist.

11. Fahrzeugdach nach einem der Ansprüche 1 bis 10, umfassend einen akustischen Signalgeber zur Ausgabe von akustischen Signalen in Reaktion auf Erfassungen.

## Claims

1. A vehicle roof having an operating device (10) for operating at least one electrical vehicle component (2, 3, 5, 6) by an occupant of the vehicle,
the operating device having a sensor surface arrangement (12) for detecting the presence and/or movement of a hand or part of a hand of the occupant in a detection region of the sensor surface arrangement (12) and for providing an electrical control signal on the basis of the detection for the purpose of controlling the at least one vehicle component (2, 3, 5, 6),
and the detection region of the sensor surface arrangement (12) extending a few cm downwards away from the surface of the sensor surface arrangement (12), with the result that contactless detection operations for detecting an operational action are possible,
**characterized in that** the sensor surface arrangement (12) has at least one functional surface (14) concavely curved and/or arranged in a depression, the curvature or depression being dimensioned in such a manner that the actuation of this functional surface (14) for detecting a further operational action requires intervention in the sensor surface arrangement (12) by the hand or part of the hand.

2. The vehicle roof according to Claim 1, the curvature or depression being dimensioned in such a manner that the functional surface (14) can be actuated only by a finger, rather than by the entire hand.

3. The vehicle roof according to Claim 1 or 2, the operating device (10) being provided at least for the purpose of operating a roof opening system (2, 3) and/or a roof shading system and/or an interior lighting system (5, 6).

4. The vehicle roof according to any of Claims 1 to 3, the operating device (10) being arranged centrally when viewed in the transverse direction (y) of the vehicle.

5. The vehicle roof according to any of Claims 1 to 4, the sensor surface arrangement (12) having a plurality of sensor elements arranged in a concealed manner.

6. The vehicle roof according to any of Claims 1 to 5, the detection being carried out optically and/or capacitively and/or using ultrasound and/or using a piezo sensor.

7. The vehicle roof according to any of Claims 1 to 6, comprising evaluation electronics for evaluating sensor signals output by sensor elements of the sensor surface arrangement (12) and for providing the electrical control signal on the basis of the result of this evaluation.

8. The vehicle roof according to any of Claims 1 to 7, the functional surface (14) being used to detect a "touching wiping movement".

9. The vehicle roof according to any of Claims 1 to 8, the sensor surface arrangement (12) having a plurality of functional surfaces (14).

10. The vehicle roof according to any of Claims 1 to 9, the sensor surface arrangement (12) having means for providing visual operating notes.

11. The vehicle roof according to any of Claims 1 to 10, comprising an acoustic signal generator for outputting acoustic signals in response to detection operations.

## Revendications

1. Toit de véhicule doté d'un dispositif de commande (10) servant à commander au moins un composant électrique de véhicule (2, 3, 5, 6) par un passager du véhicule ;
le dispositif de commande comportant un agencement de surface de détection (12) servant à détecter la présence et/ou un mouvement d'une main ou d'une partie d'une main du passager dans une zone de détection de l'agencement de surface de détection (12) et servant à mettre à disposition un signal d'excitation électrique sur la base de la détection en vue d'exciter l'au moins un composant de véhicule (2, 3, 5, 6) ; et
la zone de détection de l'agencement de surface de détection (12) s'étendant, en partant de la surface de l'agencement de surface de détection (12), de façon à s'écarter de quelques cm vers le bas, pour permettre un processus de détection sans contact servant à détecter une action de commande ;
**caractérisé en ce que** l'agencement de surface de détection (12) comporte au moins une surface fonctionnelle (14) à bombement concave et/ou disposée dans un renfoncement, le bombement et/ou le renfoncement étant dimensionné de telle sorte que l'actionnement de cette surface fonctionnelle (14) nécessite une intervention de la main et/ou d'une partie de la main dans l'agencement de surface de détection (12) pour permettre la détection d'une action de commande supplémentaire.

2. Toit de véhicule selon la revendication 1, le bombement et/ou le renfoncement étant dimensionné de telle sorte que l'actionnement de la surface fonctionnelle (14) n'est pas possible avec l'ensemble de la main mais seulement à l'aide d'un doigt.

3. Toit de véhicule selon la revendication 1 ou 2, le dispositif de commande (10) étant au moins prévu pour commander un système d'ouverture de toit (2, 3) et/ou un système d'ombrage de toit et/ou un système d'éclairage intérieur (5, 6).

4. Toit de véhicule selon l'une quelconque des revendications 1 à 3, le dispositif de commande (10) étant disposé de façon centrale par rapport à la direction transversale (y) du véhicule.

5. Toit de véhicule selon l'une quelconque des revendications 1 à 4, l'agencement de surface de détection (12) comprenant une pluralité d'éléments de détection disposés de façon couverte.

6. Toit de véhicule selon l'une quelconque des revendications 1 à 5, la détection se produisant optiquement et/ou capacitivement et/ou par ultrason et/ou par le biais d'un système d'analyse sensorielle piézoélectrique.

7. Toit de véhicule selon l'une quelconque des revendications 1 à 6, comprenant un système électronique d'analyse permettant d'analyser les signaux de détection émis par les éléments de détection de l'agencement de surface de détection (12) et de mettre à disposition le signal d'excitation électrique correspondant en fonction du résultat de cette analyse.

8. Toit de véhicule selon l'une quelconque des revendications 1 à 7, la surface fonctionnelle (14) étant utilisée pour détecter un « mouvement d'essuyage par contact ».

9. Toit de véhicule selon l'une quelconque des revendications 1 à 8, l'agencement de surface de détection (12) comportant plusieurs surfaces fonctionnelles (14).

10. Toit de véhicule selon l'une quelconque des revendications 1 à 9, l'agencement de surface de détection (12) comportant des moyens de mise à disposition de messages visuels.

11. Toit de véhicule selon l'une quelconque des revendications 1 à 10, comprenant un émetteur sonore de signaux permettant d'émettre des signaux sonores en réaction aux détections effectuées.
